# EUROPÄISCHE PATENTSCHRIFT

(11) **EP 2 818 954 B1**
(45) Veröffentlichungstag und Bekanntmachung des Hinweises auf die Patenterteilung: **16.12.2020**
(21) Anmeldenummer: 14164709.9
(22) Anmeldetag: 15.04.2014
(51) Int. Cl.: G05D 1/02, B25J 9/16, G01C 21/00, G06Q 10/04, G01C 21/20

(54) **Verfahren zum Planen einer virtuellen Spur, fahrerloses Transportfahrzeug mit einer Steuervorrichtung zur Unterstützung des entsprecheden Planungsverfahrens**
Method for planning a virtual track, driverless transport vehicle with a controller to implement the corresponding track planning method
Procédé de planification d'une trajectoire virtuelle et véhicule autonome de transport comprenant un calculateur réalisant ladite planification de trajectoire

(30) Priorität: 30.04.2013 DE 102013207899
(43) Veröffentlichungstag der Anmeldung: 31.12.2014
(73) Patentinhaber: KUKA Deutschland GmbH, 86165 Augsburg (DE)
(72) Erfinder: Pfaff, Patrick, 86163 Augsburg (DE); Klein, Björn, 86316 Friedberg (DE)
(74) Vertreter: Böss, Dieter Alexander

(56) Entgegenhaltungen:
- EP-A1- 1 895 720
- EP-A1- 2 169 502
- EP-A1- 2 172 825
- US-A1- 2006 149 465
- US-A1- 2010 286 908

## Beschreibung

Fahrerloses Transportfahrzeug, System mit einem Rechner und einem fahrerlosen Transportfahrzeug, Verfahren zum Planen einer virtuellen Spur und Verfahren zum Betreiben eines fahrerlosen Transportfahrzeugs

Die Erfindung betrifft ein fahrerloses Transportfahrzeug, ein System mit einem Rechner und einem fahrerlosen Transportfahrzeug, ein Verfahren zum Planen einer virtuellen Spur und ein Verfahren zum Betreiben eines fahrerlosen Transportfahrzeugs

Unter einem fahrerlosen Transportfahrzeug versteht man ein automatisch gesteuertes flurgebundenes Fahrzeug mit einem eigenen Antrieb. Konventionelle fahrerlose Transportfahrzeuge sind eingerichtet, einer physikalischen Spur, Linie oder anderen Markierungen auf dem Boden zu folgen. Diese Spuren oder Markierungen können mit geeigneten Sensoren des Transportfahrzeugs erkannt werden. Dadurch ist es dem konventionellen fahrerlosen Transportfahrzeug möglich, entweder der in Form einer Linie auf dem Boden aufgebrachten Spur zu folgen oder sich von Markierung zu Markierung fortzubewegen. Die Linie ist beispielsweise in Form von einer Farbmarkierung auf dem Boden aufgebracht, die z.B. mit Kameras des konventionellen fahrerlosen Transportfahrzeugs erkannt werden.

Die EP 2 172 825 A1 offenbart ein Planen eines Pfades innerhalb eines Graphen. Der Graph ist einer Umgebung zugeordnet, innerhalb derer sich ein mobiler Roboter bewegen soll.

Die EP 2 169 502 A1 offenbart eine weitere Pfadplanung mit einem Graphen. Die Kanten des Graphen umfassen jeweils eine Information über die Beschaffenheit der entsprechenden Strecken innerhalb der dem Graphen zugeordneten Umgebung.

Die US 2006/0149465 A1 offenbart ein weiteres Verfahren zum Planen eines Pfades mit einem Graphen.

Aufgabe der Erfindung ist es, Voraussetzungen für ein flexibleres Betreiben eines fahrerlosen Transportfahrzeugs anzugeben.

Die Aufgabe der Erfindung wird gelöst durch ein Verfahren zum Planen einer virtuellen Spur, entlang derer sich ein fahrerloses Transportfahrzeug innerhalb einer Umgebung automatisch von einem Startpunkt zu einem Zielpunkt bewegen soll, wobei die Umgebung Zwischenpunkte und die Zwischenpunkte, den Startpunkt und den Zielpunkt verbindende Streckenabschnitte umfasst, aufweisend folgende Verfahrensschritte:
- Bereitstellen eines der Umgebung zugeordneten Graphen, der den Zwischenpunkten zugeordnete Knoten, einen dem Startpunkt zugeordneten Startknoten, einen dem Zielpunkt zugeordneten Zielknoten und den Startknoten, den Zielknoten und die Knoten verbindende, den entsprechenden Streckenabschnitten zugeordnete Kanten umfasst, wobei den Kanten jeweils eine Information über den Verlauf einer virtuellen Teilspur zugeordnet ist, welche dem entsprechenden Streckenabschnitt zugeordnet ist,
- automatisches Ermitteln eines Pfades zwischen dem Startknoten und dem Zielknoten innerhalb des Graphen, und
- automatisches Zusammenfügen der den Kanten des ermittelten Pfades zugeordneten virtuellen Teilspuren zur virtuellen Spur, wobei das Ermitteln des Pfades aufgrund einer Information über das Fahrverhalten und/oder Fahrvermögen des fahrerlosen Transportfahrzeugs und das Ermitteln der virtuellen Spur aufgrund wenigstens einer Randbedingung erfolgt, wobei
- dem Startknoten, dem Zielknoten und den einzelnen Knoten mögliche virtuelle Übergänge zwischen den Verläufen der entsprechenden virtuellen Teilspuren zugeordnet sind und ein automatisches Zusammenfügen der den Kanten des ermittelten Pfades zugeordneten virtuellen Teilspuren und den Knoten des ermittelten Pfades zugeordneten virtuellen Übergängen zur virtuellen Spur erfolgt.

Das erfindungsgemäße Verfahren kann z.B. direkt vom fahrerlosen Transportfahrzeug durchgeführt werden. Ein weiterer Aspekt der Erfindung betrifft deshalb ein fahrerloses Transportfahrzeug, aufweisend einen Fahrzeuggrundkörper, mehrere, drehbar relativ zum Fahrzeuggrundkörper gelagerte Räder zum Bewegen des fahrerlosen Transportfahrzeugs, wenigstens einen mit wenigstens einem der Räder gekoppelten Antrieb zum Antreiben des entsprechenden Rades und eine mit dem wenigstens einen Antrieb gekoppelte Steuervorrichtung, in der eine virtuellen Karte von einer Umgebung gespeichert ist, innerhalb der sich das fahrerlose Transportfahrzeug gesteuert durch seine Steuervorrichtung automatisch von einem Startpunkt entlang einer virtuellen Spur zu einem Zielpunkt bewegen soll, wobei die Steuervorrichtung eingerichtet ist, die virtuelle Spur gemäß dem erfindungsgemäßen Verfahren zu ermitteln.

Das erfindungsgemäße Verfahren kann aber auch von einem externen Rechner durchgeführt werden. Ein weiterer Aspekt der Erfindung betrifft daher ein System, aufweisend
- ein fahrerloses Transportfahrzeug, das einen Fahrzeuggrundkörper, mehrere, drehbar relativ zum Fahrzeuggrundkörper gelagerte Räder zum Bewegen des fahrerlosen Transportfahrzeugs, wenigstens einen mit wenigstens einem der Räder gekoppelten Antrieb zum Antreiben des entsprechenden Rades und eine mit dem wenigstens einen Antrieb gekoppelte Steuervorrichtung aufweist, in der eine virtuellen Karte von einer Umgebung gespeichert ist, innerhalb der sich das fahrerlose Transportfahrzeug gesteuert durch seine Steuervorrichtung automatisch von einem Startpunkt entlang einer virtuellen Spur zu einem Zielpunkt bewegen soll, und
- einen Rechner, der eingerichtet ist, die virtuelle Spur gemäß dem erfindungsgemäßen Verfahren zu ermitteln.

Das fahrerlose Transportfahrzeug ist z.B. ein mobiler Roboter. Das als mobiler Roboter ausgeführte fahrerlose Transportfahrzeug kann einen Roboterarm mit mehreren hintereinander angeordneten Gliedern umfassen, die mittels Gelenke verbunden sind. Der Roboterarm kann z.B. am Fahrzeuggrundkörper befestigt sein. Die Steuervorrichtung zum Bewegen der Räder kann auch eingerichtet sein, den Roboterarm zu bewegen.

Das fahrerlose Transportfahrzeug kann vorzugsweise als ein holonomes bzw. omnidirektionales fahrerloses Transportfahrzeug ausgebildet sein. In diesem Fall umfasst das fahrerlose Transportfahrzeug omnidirektionale Räder, vorzugsweise sogenannte Mecanum-Räder, welche von der Steuervorrichtung angesteuert werden.

Gemäß dem erfindungsgemäßen Verfahren wird zunächst der Graph bereit gestellt. Erfindungsgemäß ist der Graph derjenigen Umgebung zugeordnet, in welcher sich das fahrerlose Transportfahrzeug vom Startpunkt zum Zielpunkt entlang der virtuellen Spur automatisch bewegen soll. Damit dies möglich ist, wird die virtuelle Spur benötigt, die deshalb zunächst geplant wird. Dies kann z.B. vor jeder automatischen Bewegung, z.B. einer Fahrt des fahrerlosen Transportfahrzeugs vom Startpunkt zum Zielpunkt, erfolgen oder einmalig, z.B. im Rahmen der Inbetriebnahme, erfolgen.

Die Umgebung umfasst neben dem Startpunkt und dem Zielpunkt die Zwischenpunkte, welche durch die Streckenabschnitte verbunden sind. Während des automatischen Bewegens bewegt sich das fahrerlose Transportfahrzeug vom Startpunkt über einen oder mehrere Zwischenpunkte und entlang den entsprechenden Streckenabschnitten. Des Weiteren sind den einzelnen Streckenabschnitten virtuelle Teilspuren zugeordnet.

Erfindungsgemäß sind die Knoten des Graphen, der insbesondere als ein gerichteter Graph ausgebildet ist, den Zwischenpunkten zugeordnet bzw. der Startknoten dem Startpunkt und der Zielknoten dem Zielpunkt. Die Kanten des Graphen sind wiederum den einzelnen Streckenabschnitten zugeordnet und umfassen jeweils eine Information über den Verlauf einer virtuellen Teilspur, welche dem entsprechenden Streckenabschnitt zugeordnet ist.

Erfindungsgemäß wird zunächst ein Pfad durch den Graphen ermittelt, der vom Startknoten zum Zielknoten und gegebenenfalls über wenigstens einen Zwischenknoten verläuft und somit die entsprechenden Kanten umfasst. Um einen geeigneten Pfad zu erhalten, können aus der Graphentheorie im Prinzip bekannte Strategien bzw. Algorithmen verwendet werden.

Da erfindungsgemäß den Kanten virtuelle Teilspuren zugeordnet sind, kann nun erfindungsgemäß die virtuelle Spur aus den virtuellen Teilspuren derjenigen Kanten zusammen gesetzt werden, die dem Pfad zugeordnet sind.

Nachdem die virtuelle Spur ermittelt wurde, kann sich das fahrerlose Transportfahrzeug automatisch, insbesondere gesteuert durch seine Steuervorrichtung entlang der virtuellen Spur vom Startpunkt zum Zielpunkt bewegen.

Damit sicher gestellt ist, dass das fahrerlose Transportfahrzeug zuverlässig sich entlang der virtuellen Spur bewegen kann, werden vorzugsweise nur solche Kanten beim automatischen Ermitteln des Pfades berücksichtigt, entlang deren virtuellen Teilspuren das fahrerlose Transportfahrzeug sich automatisch zu bewegen vermag.

Gemäß einer bevorzugten Ausführungsform des erfindungsgemäßen Verfahrens sind den Kanten jeweils eine Information über wenigstens eine Eigenschaft des ihrem zugeordneten Streckenabschnitts zugeordnet. Der Pfad wird vorzugsweise in Abhängigkeit der Informationen über die wenigstens eine Eigenschaft des entsprechenden Streckenabschnitts ermittelt. Die Eigenschaft des entsprechenden Streckenabschnitts ist z.B. dessen Länge, dessen minimale Breite, dessen minimale Höhe, die maximal zulässige Gesamtmasse eines den entsprechenden Streckenabschnitt befahrenden Fahrzeugs und/oder die maximal zulässige Geschwindigkeit eines den entsprechenden Streckenabschnitt befahrenden Fahrzeugs. Aufgrund der Information über die Länge des entsprechenden Streckenabschnitts ist es z.B. möglich, eine möglichst kurze virtuelle Spur zu ermitteln. In Kombination mit der zulässigen höchsten Geschwindigkeit kann diejenige virtuelle Spur gefunden werden, welche möglichst schnell durchfahren werden kann. Aufgrund der Information über die minimale Breite und/oder die minimale Höhe des entsprechenden Streckenabschnitts kann eine entsprechende Kante beim Ermitteln des Pfades unberücksichtigt bleiben, sollte es aufgrund der Breite bzw. Höhe des fahrerlosen Transportfahrzeugs unmöglich sein, dass das fahrerlose Transportfahrzeug den entsprechenden Streckenabschnitt passieren kann. Dasselbe gilt für die maximal zulässige Gesamtmasse.

Nach dem erfindungsgemäßen Verfahren wird der Pfad aufgrund einer Information über das Fahrverhalten und/oder Fahrvermögen des fahrerlosen Transportfahrzeugs ermittelt. Unterschiedliche fahrerlose Transportfahrzeuge können unterschiedliche Fahrverhalten und/oder Fahrvermögen haben. So können z.B. omnidirektionale fahrerlose Transportfahrzeuge wendiger sein als solche mit konventionellen Rädern. Je nach Fahrverhalten bzw. Fahrvermögen kann es sein, dass das entsprechende fahrerlose Transportfahrzeug einer virtuellen Teilspur nicht zu folgen vermag, sodass gemäß dieser Variante die entsprechende Kante beim Ermitteln des Pfades unberücksichtigt bleibt.

Nach einer weiteren Variante des erfindungsgemäßen Verfahrens sind dem Startknoten, dem Zielknoten und den einzelnen Knoten mögliche virtuelle Übergänge zwischen den Verläufen der entsprechenden virtuellen Teilspuren zugeordnet. Dann kann es vorgesehen sein, dass die den Kanten des ermittelten Pfades zugeordneten virtuellen Teilspuren und die den Knoten des ermittelten Pfades zugeordneten virtuellen Übergängen zur virtuellen Spur zusammengefasst werden. Die entstehende virtuelle Spur umfasst dann die entsprechenden virtuellen Teilspuren und die virtuellen Übergänge.

Ein weiterer Aspekt der Erfindung betrifft ein Verfahren zum Betreiben eines fahrerlosen Transportfahrzeugs, welches sich innerhalb einer Umgebung automatisch von einem Startpunkt zu einem Zielpunkt bewegen soll, aufweisend folgende Verfahrensschritte:
- Ermitteln einer virtuellen Spur, entlang derer sich das fahrerlose Transportfahrzeug automatisch vom Startpunkt zum Zielpunkt bewegen soll gemäß dem erfindungsgemäßen Verfahren, und
- automatisches Bewegen des fahrerlosen Transportfahrzeugs, insbesondere gesteuert durch eine Steuervorrichtung des fahrerlosen Transportfahrzeugs, entlang der virtuellen Spur vom Startpunkt zum Zielpunkt.

Gemäß einer Ausführungsform des erfindungsgemäßen Verfahrens zum Betreiben eines fahrerlosen Transportfahrzeugs kann dieses ein automatisches Modifizieren der virtuellen Spur während des automatischen Bewegens des fahrerlosen Transportfahrzeugs vom Starpunkt zum Zielpunkt basierend auf den Graphen und aufgrund eines Erkennens, dass ein noch zu befahrender Streckenabschnitt nicht befahrbar ist, und ein automatisches Bewegen des fahrerlosen Transportfahrzeugs entlang der modifizierten virtuellen Spur zum Zielpunkt aufweisen. Erkennt z.B. das fahrerlose Transportfahrzeug während seines automatischen Bewegens entlang der virtuellen Spur, dass ein Streckenabschnitt, den es passieren soll, nicht passierbar ist, dann kann basierend auf dem Graphen ein aktualisierter Pfad ermittelt werden, der nicht diejenige Kante umfasst, deren zugeordneter Streckenabschnitt als unpassierbar erkannt wurde und den dem aktuellen Zwischenpunkt zugeordneten Knoten mit dem Zielknoten verbindet. Anschließend können die den Kanten des aktualisierten Pfades zugeordneten virtuellen Teilspuren zur modifizierten virtuellen Spur zusammengefügt werden. Diese Variante ermöglicht das modifizieren der virtuelle Spur, sodass das fahrerlose Transportfahrzeug trotzdem zuverlässig seinen Zielpunkt erreicht. Der aktualisierte Pfad wird vorzugsweise vom fahrerlosen Transportfahrzeug selber ermittelt. Es kann aber auch vorgesehen sein, dass der aktualisierte Pfad vom Rechner ermittelt wird und z.B. eine Angabe über die aktualisierte virtuelle Spur dem fahrerlosen Transportfahrzeug insbesondere drahtlos übermittelt wird. Für das Ermitteln des aktualisierten Pfades wird quasi der aktuelle Zwischenknoten als neuer Startknoten verwendet. Gegebenfalls kann es vorgesehen sein, sollte das fahrerlose Transportfahrzeug schon einen Teil einer virtuellen Teilspur abgefahren haben, bevor erkannt wird, dass der entsprechende Streckenabschnitt unpassierbar ist, dass sich das fahrerlose Transportfahrzeug automatisch zum vorhergehenden Zwischenpunkt zurück bewegt, um sich von dort entlang der modifizierten virtuellen Spur zum Zielpunkt zu bewegen. Vorzugsweise bewegt sich das fahrerlose Transportfahrzeug entlang der bereits abgefahrenen virtuellen Teilspur zurück zum vorhergehenden Zwischenpunkt.

Je nach Ausführungsform des erfindungsgemäßen Verfahrens bzw. des erfindungsgemäßen fahrerlosen Transportfahrzeugs bzw. erfindungsgemäßen Systems wird mithilfe eines Graphen, insbesondere mittels eines gerichteten Graphen die virtuelle Spur geplant. Dabei könne vorzugsweise die Kanten des Graphen den Streckenabschnitten und die Knoten entsprechen Abzweigungen und Haltepunkten (Zwischenpunkten) zugeordnet sein. Zur Berechnung beispielsweise der kürzesten und/oder günstigsten Pfades können z.B. eine Vielzahl dem Fachmann im Prinzip aus der Graphentheorie bekannte Algorithmen angewandt werden. Dazu gehört z.B. der Dykstra-Algorithmus.

Unter zu Hilfenahme der Konzepte zur virtuellen Spurführung lässt sich eine Abbildung zwischen den real existierenden virtuellen Spuren und der Visualisierung als Graph herstellen. Virtuelle Spuren lassen sich in Streckenabschnitte unterteilen, welche z.B. auch für mehrere Start-Ziel-Konfigurationen gemeinsam genutzt werden können. Damit entfällt die Redundanz, für verschiedene Start-Ziel-Konfigurationen die gesamte Strecke abspeichern zu müssen. Vorzugsweise sollten eingehende und ausgehende Streckenabschnitte an einem Knoten bzw. Zwischenpunkt abfahrbar sein, indem z.B. eine entsprechende Kurve bzw. Übergänge in der virtuellen Spur definiert ist. Ist die Abbildung für die zu planende Applikation vollständig, kann z.B. eine Person z.B. im Rahmen der Inbetriebnahme durch Auswahl von Kanten und Knoten schnell neue Wege und Ziele für ein fahrerloses Transportfahrzeug programmieren.

Beispielsweise bei relativ komplexen Anlagen kann es sinnvoll sein, insbesondere die Person, die die Anlage in Betrieb nimmt, bei der Planung von Wegen durch die Anlage, d.h. die Umgebung, zu unterstützen. Eine Planung entlang des insbesondere als gerichteten Graphen ausgebildeten Graphen kann z.B. als Vorschlag für den zu erstellenden Weg dienen. Dabei können z.B. neben der eigentlichen Streckenlänge verschiedene Arten von Kosten bei der Planung berücksichtigt werden, zum Beispiel Belegungsgrad von Wegen, Kurvigkeit, etc.

Insbesondere zur Laufzeit des Systems kann es vorgesehen sein, einzelne Kanten im Graphen auszublenden, falls es auf dem entsprechenden Streckeabschnitt zum Beispiel zu einer Hindernissituation gekommen ist. Durch Neuplanung des Pfades oder der Pfade im Graphen wird es dem fahrerlosen Transportfahrzeug oder den fahrerlosen Transportfahrzeugen möglich, trotzdem ihre Zielpunkte zu erreichen, obwohl der ursprüngliche Pfad über einen ausgeblendeten Streckenabschnitt verlief.

Im Gegensatz zur komplett ortsungebundenen Navigation bietet die virtuelle Spurführung den Anlagenplanern die Möglichkeit, die fahrerlosen Transportfahrzeuge auf den immer gleichen Pfaden bzw. virtuellen Spuren zu bewegen.

Ein Ausführungsbeispiel der Erfindung ist exemplarisch in den beigefügten schematischen Figuren dargestellt. Es zeigen:
- Figur 1: eine Draufsicht eines fahrerlosen Transportfahrzeugs,
- Figur 2: eine Seitenansicht des fahrerlosen Transportfahrzeugs,
- Figuren 3 - 5: eine Umgebung für das fahrerlose Transportfahrzeug,
- Figur 6: eine virtuelle Landkarte und einen Graph, und
- Figuren 7, 8: den Graphen.

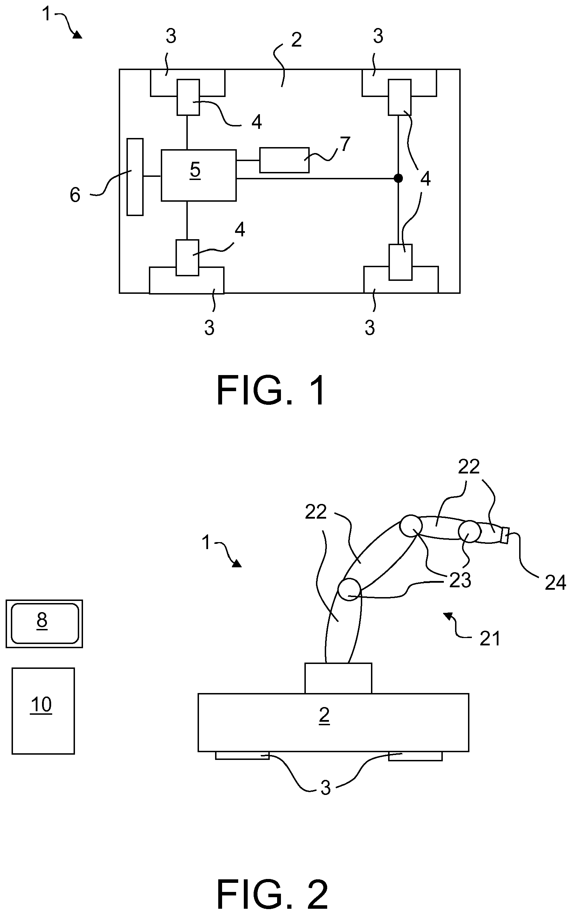

Die Fig. 1 zeigt in einer Draufsicht schematisch ein fahrerloses Transportfahrzeug 1 und die Fig. 2 zeigt eine Seitenansicht des fahrerlosen Transportfahrzeugs 1.

Das fahrerlose Transportfahrzeug 1 ist vorzugsweise derart ausgebildet, dass es sich in alle Richtungen frei bewegen lässt. Das fahrerlose Transportfahrzeug 1 ist insbesondere als ein omnidirektional bewegbares bzw. holonomes fahrerloses Transportfahrzeug ausgebildet. Das fahrerlose Transportfahrzeug 1 kann ein mobiler Roboter sein, der einen Roboterarm 21 mit mehreren, hintereinander angeordneten Gliedern 22 umfasst, welche mittels Gelenke 23 verbunden sind. Der Roboterarm 21 umfasst insbesondere eine Befestigungsvorrichtung z.B. in Form eines Flansches 24, an dem ein nicht näher dargestellter Endeffektor befestigt werden kann.

Im Falle des vorliegenden Ausführungsbeispiels weist das fahrerlose Transportfahrzeug 1 einen Fahrzeuggrundkörper 2 und mehrere omnidirektionale Räder 3 auf, die auch als Mecanum-Räder bezeichnet werden. Solche Räder umfassen beispielsweise eine drehbar gelagerte Felge, an der mehrere Rollkörper antriebslos gelagert sind. Die Felge kann mit einem Antrieb angetrieben werden. Im Falle des vorliegenden Ausführungsbeispiels werden die Räder 3 mit jeweils einem elektrischen Antrieb 4 angetrieben. Diese sind vorzugsweise geregelte elektrische Antriebe.

Das fahrerlose Transportfahrzeug 1 weist ferner eine am Fahrzeuggrundkörper 2 angeordnete Steuervorrichtung 5 auf, die mit den Antrieben 4 verbunden ist. Gegebenfalls kann diese auch die Bewegung des Roboterarms 21, wenn vorhanden, ansteuern.

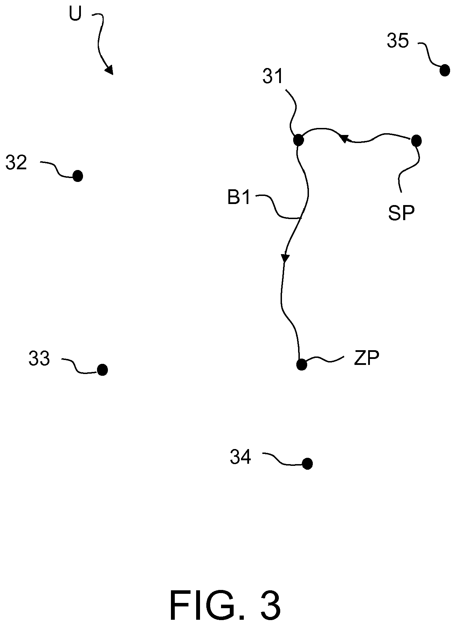

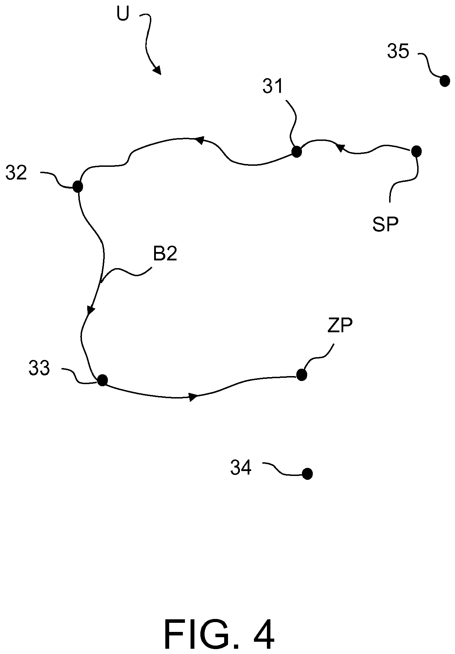

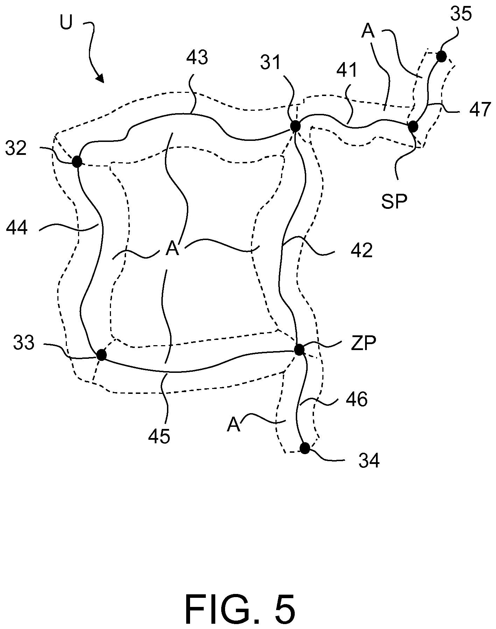

Das fahrerlose Transportfahrzeug 1 ist vorgesehen, sich automatisch in einer in den Figuren 3 bis 5 gezeigten Umgebung U insbesondere von einem Startpunkt SP zu einem Zielpunkt ZP zu bewegen. Dazu läuft auf der Steuervorrichtung 5 ein Rechenprogramm, das die Antriebe 4 derart ansteuert, dass diese automatisch das fahrerlose Transportfahrzeug 1 vom Startpunkt SP z.B. entlang einer in der Fig. 3 gezeigten ersten virtuellen Spur B1 oder einer in der Fig. 4 gezeigten zweiten virtuellen Spur B2 zum Zielpunkt ZP bewegt.

Im Falle des vorliegenden Ausführungsbeispiels sind der Umgebung U nicht nur der Startpunkt SP und der Zielpunkt ZP zugeordnet, sondern mehrere Zwischenpunkte. Im Falle des vorliegenden Ausführungsbeispiels handelt es sich bei den Zwischenpunkten um einen ersten Zwischenpunkt 31, einen zweiten Zwischenpunkt 32, einen dritten Zwischenpunkt 33, einen vierten Zwischenpunkt 34 und einen fünften Zwischenpunkt 35.

Die Zwischenpunkte 31 bis 35 sind durch Streckenabschnitte A verbunden, auf denen das fahrerlose Transportfahrzeug 1 gegebenenfalls zwischen zwei Zwischenpunkten fahren kann.

Des Weitern sind zwischen den einzelnen Zwischenpunkten 31 bis 35 und dem Startpunkt SP und dem Zielpunkt ZP mehrere virtuelle Teilspuren festgelegt. Eine erste virtuelle Teilspur 41 verbindet den Startpunkt SP mit dem ersten Zwischenpunkt 31, eine zweite virtuelle Teilspur 42 verbindet den ersten Zwischenpunkt 31 mit dem Zielpunkt ZP, eine dritte virtuelle Teilspur 43 verbindet den ersten Zwischenpunkt 31 mit dem zweiten Zwischenpunkt 32, eine vierte virtuelle Teilspur 44 verbindet den zweiten Zwischenpunkt 32 mit dem dritten Zwischenpunkt 33, eine fünfte virtuelle Teilspur 45 verbindet den dritten Zwischenpunkt 33 mit dem Zielpunkt ZP, eine sechste virtuelle Teilspur 46 verbindet den Zielpunkt ZP mit dem vierten Zwischenpunkt 34 und eine siebte virtuelle Teilspur 47 verbindet den Startpunkt SP mit dem fünften Zwischenpunkt 35. Die virtuellen Teilspuren 41 bis 47 verlaufen innerhalb der entsprechenden Streckenabschnitte A.

Im Falle des vorliegenden Ausführungsbeispiels setzten sich die virtuellen Spuren, entlang derer sich das fahrerlose Transportfahrzeug 1 bewegen soll, in der Regel aus mehreren virtuellen Teilspuren 41 bis 47 zusammen. Im Falle des vorliegenden Ausführungsbeispiels umfasst die erste virtuelle Spur B1 die erste virtuelle Teilspur 41 und die zweite virtuelle Teilspur 42. Die zweite Spur B2 umfasst die erste virtuelle Teilspur 41, die dritte virtuelle Teilspur 43, die vierte virtuelle Teilspur 44 und die fünfte virtuelle Teilspur 45.

Das fahrerlose Transportfahrzeug 1 umfasst ferner wenigstens einen mit der Steuervorrichtung 5 verbundenen und z.B. am Fahrzeuggrundkörper 2 angeordneten Sensor 6. Der bzw. die Sensoren 6 umfassen z.B. wenigstens einen Laserscanner und/oder wenigstens eine Kamera und sind vorgesehen, die Umgebung des fahrerlosen Transportfahrzeugs 1 während seiner automatischen Bewegung zu erfassen bzw. abzutasten bzw. Bilder von der Umgebung U des fahrerlosen Transportfahrzeugs 1 zu erstellen. Die Steuervorrichtung 5 wiederum ist eingerichtet, die von den Sensoren 6 stammenden Signale oder Daten z.B. mittels Bilddatenverarbeitung zu verarbeiten bzw. auszuwerten. Der wenigstens eine Sensor 6 umfasst z.B. einen 2D Laserscanner, einen 3D Laserscanner, eine RGBD Kamera und/oder eine TOF Kamera. TOF-Kameras sind 3D-Kamerasysteme, die mit dem Laufzeitverfahren Distanzen messen.

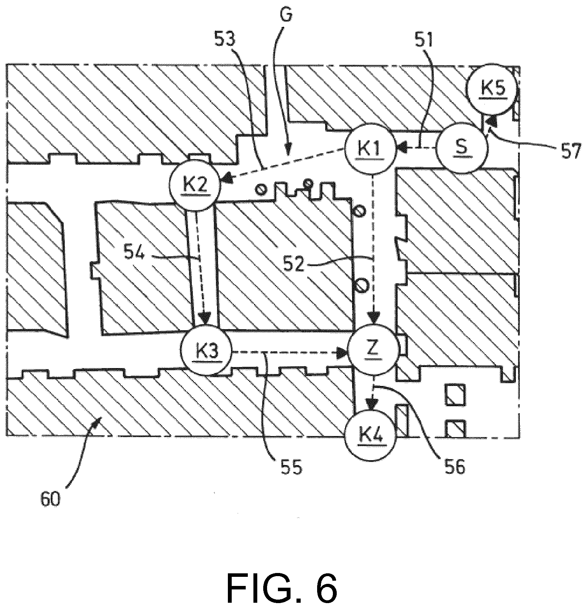

Wie bereits ausgeführt, ist im Falle des vorliegenden Ausführungsbeispiels das fahrerlose Transportfahrzeug 1 eingerichtet, sich automatisch vom Startpunkt SP zum Zielpunkt ZP vorzugsweise entlang der ersten virtuellen Teilspur B1 innerhalb der Umgebung U zu bewegen. Dazu ist im Falle des vorliegenden Ausführungsbeispiels z.B. in der Steuervorrichtung 5 eine in der Fig. 6 gezeigte virtuelle Karte 60 bzw. eine digitale Landkarte derjenigen Umgebung U gespeichert, in der sich das fahrerlose Transportfahrzeug 1 bewegen soll. Die Umgebung U ist z.B. eine Halle. Die virtuelle Karte 60 wurde z.B. durch ein sogenanntes SLAM Verfahren z.B. basierend auf Signalen bzw. Daten der Sensoren 6 und/oder aufgrund von nicht näher dargestellten, den Rädern 3 zugeordneten Radsensoren, erstellt. Die virtuelle Karte 60 ist z.B. in einem Speicher 7 des fahrerlosen Transportfahrzeugs 1 gespeichert, der mit der Steuervorrichtung 5 gekoppelt ist. Die virtuelle Karte 60 kann z.B. mittels einer Anzeigevorrichtung 8 dargestellt werden.

Im Falle des vorliegenden Ausführungsbeispiels ist es vorgesehen, diejenige virtuelle Spur, entlang der sich das fahrerlose Transportfahrzeug 1 vom Startpunkt SP zum Zielpunkt ZP automatisch bewegen soll, zu planen. Die Planung führt z.B. das fahrerlose Transportfahrzeug 1 selbst durch, z.B. mittels seiner Steuervorrichtung 5 bzw. einem auf seiner Steuervorrichtung 5 laufenden Rechenprogramms. Die Planung kann aber z.B. auch mittels eines externen Rechners 10 bzw. einem auf dem Rechner 10 laufenden Rechenprogramms durchgeführt werden, wobei der Rechner 10 das Ergebnis der Planung dem Steuerrechner 5 vorzugsweise drahtlos übermittelt.

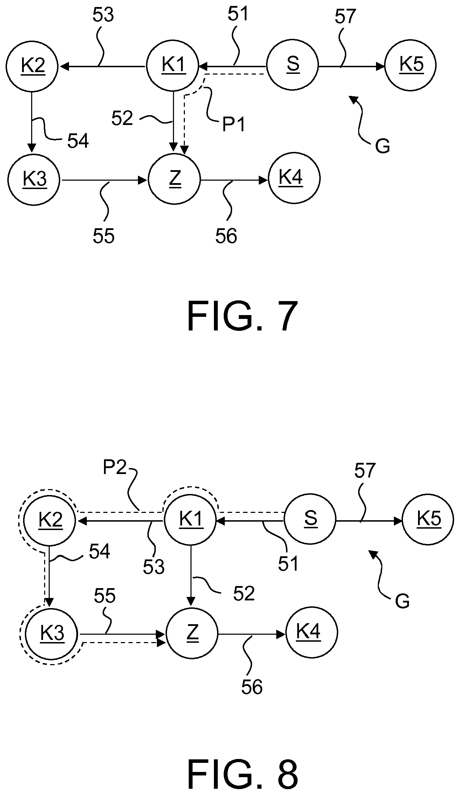

Die Planung basiert im Falle des vorliegenden Ausführungsbeispiels auf einem in den Figuren 6 bis 8 gezeigten Graphen G. Der Graph G kann z.B. zusammen mit der virtuellen Karte 60 auf der Anzeigevorrichtung 8 dargestellt werden, wie dies in der Fig. 6 dargestellt ist.

Der Graph G umfasst mehrere Knoten und die Knoten verbindende Kanten. Der Graph G umfasst insbesondere einen Startknoten S, einen Zielknoten Z, einen ersten Knoten K1, einen zweiten Knoten K2, einen dritten Knoten K3, einen vierten Knoten K4 und einen fünften Knoten K5. Der Graph G umfasst insbesondere eine erste Kante 51, eine zweite Kante 52, eine dritte Kante 53, eine vierte Kante 54, eine fünfte Kante 55, eine sechste Kante 56 und eine siebte Kante 57. Im Falle des vorliegenden Ausführungsbeispiels verbindet die erste Kante 51 den Startknoten S mit dem ersten Knoten K1, die zweite Kante 52 den ersten Knoten K1 mit dem Zielknoten Z, die dritte Kante 53 den ersten Knoten K1 mit dem zweiten Knoten K2, die vierte Kante 54 den zweiten Knoten K2 mit dem dritten Knoten K3, die fünfte Kante 55 den dritten Knoten K3 mit dem Zielknoten Z, die sechste Kante 56 den Zielknoten Z mit dem vierten Knoten K4 und die siebte Kante 57 den Startknoten S mit dem fünften Knoten K5. Der Graph G ist insbesondere ein gerichteter Graph G, weshalb die Kanten 51 bis 57 als Pfeile in den Figuren 6 bis 8 dargestellt sind.

Im Falle des vorliegenden Ausführungsbeispiels ist dem Startpunkt SP in der Umgebung U der Startknoten S des Graphen G und der Zielpunkt ZP dem Zielknoten Z zugeordnet. Außerdem sind die Zwischenpunkte 31 bis 35 der Umgebung U den Knoten K1 bis K5 des Graphen G und die virtuellen Teilspuren 41 bis 47 den Kanten 51 bis 57 zugeordnet. Insbesondere ist der erste Zwischenpunkt 31 der Umgebung U dem ersten Konten K1 des Graphen G, der zweite Zwischenpunkt 32 der Umgebung U dem zweiten Konten K2 des Graphen G, der dritte Zwischenpunkt 33 der Umgebung U dem dritte Konten K3 des Graphen G, der vierte Zwischenpunkt 34 der Umgebung U dem vierte Konten K4 des Graphen G und der fünfte Zwischenpunkt 35 der Umgebung U dem fünfte Konten K5 des Graphen G zugeordnet. Insbesondere ist die erste virtuelle Teilspur 41 der ersten Kante 51, die zweite virtuelle Teilspur 42 der zweiten Kante 52, die dritten virtuelle Teilspur 43 der dritten Kante 53, die vierte virtuelle Teilspur 44 der vierten Kante 54, die fünfte Teil virtuelle Teilspur 45 der fünften Kante 55, die sechste virtuelle Teilspur 46 der sechsten Kante 56, und die siebte virtuelle Teilspur 47 der siebten Kante 57 zugeordnet.

So umfassen im Falle des vorliegenden Ausführungsbeispiels die einzelnen Kanten 51 bis 57 jeweils eine Information über die ihnen zugeordneten virtuellen Teilspuren 41 bis 47. Diese Informationen können in Form von Attributen den einzelnen Kanten 51 bis 57 zugeordnet sein.

Im Falle des vorliegenden Ausführungsbeispiels umfasst die Information über die entsprechende virtuelle Teilspur 41 bis 47 insbesondere eine Information über den Verlauf der entsprechenden virtuellen Teilspur 41 bis 47. Weitere Informationen über die entsprechende virtuellen Teilspuren 41 bis 47 können z.B. eine Information über die minimale Breite und/oder minimale Höhe und/oder der Länge der der entsprechenden virtuellen Teilspur 41 bis 47 zugeordneten Streckenabschnitte A sein. Eine weitere Information kann auch eine Angabe über die maximal erlaubte Geschwindigkeit sein, mit der der entsprechende Streckenabschnitt A befahren werden darf, und/oder eine Angabe über eine maximal zulässige Gesamtmasse, welche das gegebenenfalls beladene fahrerlose Transportfahrzeug 1 aufweisen darf, um den entsprechenden Streckenabschnitt A befahren zu dürfen. Auch eine Länge des entsprechenden Streckenabschnitts A kann als Information hinterlegt sein.

Dem Startknoten S, dem Zielknoten Z und den einzelnen Knoten K1-K5 sind im Falle des vorliegenden Ausführungsbeispiels mögliche Übergänge, z.B. Kurven, zwischen den Verläufen der entsprechenden virtuellen Teilspuren 41 bis 47 zugeordnet.

Im Falle des vorliegenden Ausführungsbeispiels erfolgt die Planung derjenigen virtuellen Teilspur, entlang der sich das fahrerlose Transportfahrzeug 1 bewegen soll, auch auf einer Information über das entsprechende fahrerlose Transportfahrzeug 1, wie z.B. dessen Gesamtmasse, maximale Höhe und/oder eine Angabe über dessen Wendigkeit.

Aufgrund der der Steuervorrichtung 5 bzw. dem Rechner 10 zugänglichen Informationen ist es dieser bzw. diesem möglich, beispielsweise auch unter weiteren Randbedingungen mittels des Graphen G, wenn möglich, einen oder mehrere Pfade innerhalb des Graphen G zu ermitteln, welche möglichen virtuellen Teilspuren zugeordnet sind, entlang derer sich das fahrerlose Transportfahrzeug 1 vom Startpunkt SP zum Zielpunkt ZP automatisch bewegen kann. Im Falle des vorliegenden Ausführungsbeispiels ist es aufgrund der den Kanten 51 bis 57 und den Knoten S, Z, K1 bis K5 zugeordneten Informationen über die Verläufe der virtuellen Teilspuren 41 bis 46 und den Eigenschaften der entsprechenden Streckenabschnitte A, sowie den Angaben über das fahrerlose Transportfahrzeug 1 möglich, einen ersten Pfad P1 und eine zweiten Pfad P2 zwischen dem Startknoten S und dem Zielknoten Z zu ermitteln, deren zugeordnete virtuellen Teilspuren (dem ersten Pfad P1 ist die erste virtuelle Spur B1 und dem zweiten Pfad P2 ist die zweite virtuelle Spur B2 zugeordnet) und die entsprechenden Streckenabschnitte A derart beschaffen sind, dass es dem fahrerlosen Transportfahrzeug 1 möglich ist, automatisch vom Startpunkt SP zum Zielpunkt ZP zu fahren.

Die Planung der virtuellen Spur kann zusätzlich auch auf weiteren Randbedingungen beruhen, z.B. dass die virtuelle Spur möglichst kurz sein soll oder derart ausgeführt sein soll, dass das fahrerlose Transportfahrzeug 1 möglichst schnell vom Startpunkt SP zum Zielpunkt ZP gelangt.

Zur Berechnung z.B. der kürzesten virtuellen Spur zwischen dem Startpunkt SP und dem Zielpunkt ZP können aus der Graphentheorie dem Fachmann im Prinzip bekannte Algorithmen verwendet werden, wie z.B. der Dykstra-Algorithmus. Die kürzeste virtuelle Spur ist im Falle des vorliegenden Ausführungsbeispiels die erste virtuelle Spur B1.

Nachdem die virtuelle Spur fertig geplant ist, z.B. die erste virtuelle Spur B1, bewegt sich das fahrerlose Transportfahrzeug 1 automatisch entlang der geplanten ersten virtuellen Spur B1 vom Startpunkt S zum Zielpunkt Z. Diese Planung kann z.B. vor jeder Bewegung neu berechnet werden oder einmal z.B. im Rahmen einer Inbetriebnahme des fahrerlosen Transportfahrzeugs 1.

Ist es z.B. nicht möglich, dass das fahrerlose Transportfahrzeug 1 den der zweiten virtuellen Teilspur 42 zugeordneten Streckenabschnitt A befahren kann, weil z.B. das fahrerlose Transportfahrzeug 1 zu breit für den entsprechenden Streckenabschnitt A ist oder die Wenigkeit des fahrerlosen Transportfahrzeugs für den Verlauf der zweiten virtuellen Teilspur 42 nicht ausreicht, so ermittelt die Steuervorrichtung 5 bzw. der Rechner 10 nicht die erste virtuelle Spur B1 sondern die zweite virtuelle Spur B2 als geplante virtuelle Spur für das automatische Bewegen des fahrerlosen Transportfahrzeugs 1 vom Startpunkt SP zum Zielpunkt ZP.

Im Falle des vorliegenden Ausführungsbeispiels kann es noch vorgesehen sein, dass z.B. bei der Inbetriebnahme oder auch während des Betriebs des fahrerlosen Transportfahrzeugs 1 eine Person den Graphen G z.B. durch Entfernen von einem oder mehrere Kanten modifiziert. Wird beispielsweise ein Streckenabschnitt A gesperrt, so kann die entsprechende Kante vom Graphen G entfernt werden. Dies kann automatisch oder auch manuell erfolgen.

Im Falle des vorliegenden Ausführungsbeispiels kann es noch vorgesehen sein, dass während des automatischen Bewegens des fahrerlosen Transportfahrzeugs 1 entlang der geplanten virtuellen Spur diese modifiziert wird. Erkennt z.B. das fahrerlose Transportfahrzeug 1 während des Bewegens z.B. durch Auswerten der Signale der Sensoren 6, dass ein Streckenabschnitt A, den das fahrerlose Transportfahrzeug 1 befahren soll, nicht befahrbar ist, so kann es vorgesehen sein, dass eine Neuplanung der virtuellen Spur erfolgt. Dies kann durch den Rechner 10 oder durch die Steuervorrichtung 5 erfolgen. Gegebenenfalls kehrt das fahrerlose Transportfahrzeug 1 zu dem Zwischenpunkt zurück, den es als letztes passiert hat. Vorzugsweise bewegt sich das fahrerlose Transportfahrzeug 1 entlang der bereits gefahrenen virtuellen Spur bzw. virtuellen Teilspur bis zum vorhergehenden Zwischenpunkt zurück.

## Patentansprüche

1. Verfahren zum Planen einer virtuellen Spur (B1, B2), entlang derer sich ein fahrerloses Transportfahrzeug (1) innerhalb einer Umgebung (U) automatisch von einem Startpunkt (SP) zu einem Zielpunkt (ZP) bewegen soll, wobei die Umgebung (U) Zwischenpunkte (31-35) und die Zwischenpunkte (31-35), den Startpunkt (SP) und den Zielpunkt (ZP) verbindende Streckenabschnitte (A) umfasst, aufweisend folgende Verfahrensschritte:
- Bereitstellen eines der Umgebung (U) zugeordneten Graphen (G), der den Zwischenpunkten (31-35) zugeordnete Knoten (K1-K5), einen dem Startpunkt (SP) zugeordneten Startknoten (S), einen dem Zielpunkt (ZP) zugeordneten Zielknoten (Z) und den Startknoten (S), den Zielknoten (Z) und die Knoten (K1-K5) verbindende, den entsprechenden Streckenabschnitten (A) zugeordnete Kanten (51-57) umfasst, wobei den Kanten (51-57) jeweils eine Information über den Verlauf einer virtuellen Teilspur (41-47) zugeordnet ist, welche dem entsprechenden Streckenabschnitt (A) zugeordnet ist,
- automatisches Ermitteln eines Pfades (P1, P2) zwischen dem Startknoten (S) und dem Zielknoten (Z) innerhalb des Graphen (G), und
- automatisches Zusammenfügen der den Kanten (51-57) des ermittelten Pfades (P1, P2) zugeordneten virtuellen Teilspuren (41-47) zur virtuellen Spur (B1, B2), wobei das Ermitteln des Pfades (P1, P2) aufgrund einer Information über das Fahrverhalten und/oder Fahrvermögen des fahrerlosen Transportfahrzeugs (1) und das Ermitteln der virtuellen Spur (B1, B2) aufgrund wenigstens einer Randbedingung erfolgt, wobei
- dem Startknoten (S), dem Zielknoten (Z) und den einzelnen Knoten (K1-K5) mögliche virtuelle Übergänge zwischen den Verläufen der entsprechenden virtuellen Teilspuren (41-47) zugeordnet sind und ein automatisches Zusammenfügen der den Kanten (51-57) des ermittelten Pfades (P1, P2) zugeordneten virtuellen Teilspuren (41-47) und den Knoten (K1-K5) des ermittelten Pfades (P1, P2) zugeordneten virtuellen Übergängen zur virtuellen Spur (B1, B2) erfolgt.

2. Verfahren nach Anspruch 1, bei dem nur solche Kanten (51-57) beim automatischen Ermitteln des Pfades (P1, P2) berücksichtigt werden, entlang deren virtuelle Teilspuren (41-47) das fahrerlose Transportfahrzeug (1) sich automatisch zu bewegen vermag.

3. Verfahren nach Anspruch 1 oder 2, bei dem den Kanten (51-57) jeweils eine Information über wenigstens eine Eigenschaft des ihr zugeordneten Streckenabschnitts (A) zugeordnet ist, und der Pfad (P1, P2) in Abhängigkeit der Informationen über die wenigstens eine Eigenschaft des entsprechenden Streckenabschnitts (A) ermittelt wird.

4. Verfahren nach Anspruch 3, bei dem die Eigenschaft des entsprechenden Streckenabschnitts (A) dessen Länge, minimale Breite, minimale Höhe, die maximal zulässige Gesamtmasse eines den entsprechenden Streckenabschnitt (A) befahrenden Fahrzeugs und/oder die maximal zulässige Geschwindigkeit eines den entsprechenden Streckenabschnitt (A) befahrenden Fahrzeugs umfasst.

5. Fahrerloses Transportfahrzeug, aufweisend einen Fahrzeuggrundkörper (2), mehrere, drehbar relativ zum Fahrzeuggrundkörper (2) gelagerte Räder (3) zum Bewegen des fahrerlosen Transportfahrzeugs (1), wenigstens einen mit wenigstens einem der Räder (3) gekoppelten Antrieb (4) zum Antreiben des entsprechenden Rades (3) und eine mit dem wenigstens einen Antrieb (4) gekoppelte Steuervorrichtung (5), in der eine virtuellen Karte (60) von einer Umgebung (U) gespeichert ist, innerhalb der sich das fahrerlose Transportfahrzeug (1) gesteuert durch seine Steuervorrichtung (5) automatisch von einem Startpunkt (SP) entlang einer virtuellen Spur (B1, B2) zu einem Zielpunkt (ZP) bewegen soll, wobei die Steuervorrichtung (5) eingerichtet ist, die virtuelle Spur (B1, B2) gemäß dem Verfahren nach einem der Ansprüche 1 bis 4 zu ermitteln.

6. System, aufweisend
- ein fahrerloses Transportfahrzeug (1), das einen Fahrzeuggrundkörper (2), mehrere, drehbar relativ zum Fahrzeuggrundkörper (2) gelagerte Räder (3) zum Bewegen des fahrerlosen Transportfahrzeugs (1), wenigstens einen mit wenigstens einem der Räder (3) gekoppelten Antrieb (4) zum Antreiben des entsprechenden Rades (3) und eine mit dem wenigstens einen Antrieb (4) gekoppelte Steuervorrichtung (5) aufweist, in der eine virtuellen Karte (60) von einer Umgebung (U) gespeichert ist, innerhalb der sich das fahrerlose Transportfahrzeug (1) gesteuert durch seine Steuervorrichtung (5) automatisch von einem Startpunkt (SP) entlang einer virtuellen Spur (B1, B2) zu einem Zielpunkt (ZP) bewegen soll, und
- einen Rechner (10), der eingerichtet ist, die virtuelle Spur (B1, B2) gemäß dem Verfahren nach einem der Ansprüche 1 bis 4 zu ermitteln und eine Angabe über die ermittelte virtuelle Spur (B1, B2) insbesondere drahtlos an das fahrerlose Transportfahrzeug (1) zu übermitteln.

## Claims

1. Method for planning a virtual track (B1, B2), along which a driverless transport vehicle (1) is to move automatically within an environment (U) from a start point (SP) to an end point (ZP), wherein the environment (U) comprises intermediate points (31-35) and sections (A) connecting the intermediate points (31-35), the start point (SP) and the end point (ZP), comprising the following method steps:
- providing a graph (G) assigned to the environment (U), the graph comprising nodes (K1-K5) assigned to the intermediate points (31-35), a start node (S) assigned to the start point (SP), an end node (Z) assigned to the end point (ZP), and edges (51-57) connecting the start node (S), the end node (Z) and the nodes (K1-K5) and being assigned to the corresponding sections (A), wherein information about the course of a virtual track section (41-47) is assigned to the respective edges (51-57), the relevant virtual track section being assigned to the corresponding section (A),
- automatically determining a path (P1, P2) between the start node (S) and the end node (Z) within the graph (G), and
- automatically merging the virtual track sections (41-47) assigned to the edges (51-57) of the determined path (P1, P2) to the virtual track (B1, B2), wherein determining the path (P1, P2) is performed based on information about the driving behaviour and/or driving ability of the driverless transport vehicle (1) and determining the virtual track (B1, B2) is based on at least one constraint, wherein
- possible virtual junctions between the courses of the corresponding virtual track sections (41-47) are assigned to the start node (S), the end node (Z) and the individual nodes (K1-K5), and there is an automatic merging of the virtual track sections (41-47) assigned to the edges (51-57) of the determined path (P1, P2) and the virtual junctions assigned to the nodes (K1-K5) of the determined path (P1, P2) in order to obtain the virtual track (B1, B2).

2. Method according to claim 1, wherein the only edges (51-57) considered in automatically determining the path (P1, P2) are those associated with virtual track sections (41-47) that the driverless transport vehicle (1) is able to move along automatically.

3. Method according to claim 1 or 2, wherein information on at least one characteristic of the relevant section (A) is assigned to the edges (51-57), and the path (P1, P2) is determined depending on information on the at least one characteristic of the relevant section (A).

4. Method according to claim 3, wherein the characteristic of the corresponding section (A) includes its length, minimum width, minimum height, the maximum permissible total mass of a vehicle travelling on the relevant section (A) and/or the maximum permissible speed of a vehicle travelling on the relevant section (A).

5. Driverless transport vehicle, comprising a vehicle base body (2),
a plurality of wheels (3) mounted rotatably relative to the vehicle base body (2) for moving the driverless transport vehicle (1), at least one drive (4) coupled to at least one of the wheels (3) for driving the corresponding wheel (3), and a control unit (5) connected to the at least one drive (4), in which a virtual map (60) of an environment (U) is stored, within which the driverless transport vehicle (1) controlled by its control unit (5) is to move automatically from a start point (SP) along a virtual track (B1, B2) to an end point (ZP), wherein the control unit (5) is configured to determine the virtual track (B1, B2) according to the method of any of claims 1 to 4.

6. System, comprising:
- a driverless transport vehicle (1), which comprises a vehicle base body (2), a plurality of wheels (3) mounted rotatably relative to the vehicle base body (2) for moving the driverless transport vehicle (1), at least one drive (4) coupled to at least one of the wheels (3) for driving the corresponding wheel (3), and a control unit (5) connected to the at least one drive (4), in which a virtual map (60) of an environment (U) is stored, within which the driverless transport vehicle (1) controlled by its control unit (5) is to move automatically from a start point (SP) along a virtual track (B1, B2) to an end point (ZP), and
- a computer (10) configured to determine the virtual track (B1, B2) according to the method of any of claims 1 to 4 and to transmit a specification of the determined virtual track (B1, B2) to the driverless transport vehicle (1), in particular wirelessly.

## Revendications

1. Procédé de planification d'une trajectoire virtuelle (B1, B2), le long de laquelle un véhicule de transport sans conducteur (1) doit se déplacer automatiquement dans un environnement (U) depuis un point de départ (SP) jusqu'à un point de destination (ZP), l'environnement (U) comprenant des points intermédiaires (31-35) et des tronçons de route (A) reliant les points intermédiaires (31-35), le point de départ (SP) et le point de destination (ZP), comprenant les étapes de procédé suivantes :
- fournir un graphe (G) associé à l'environnement (U), lequel comprend des nœuds (K1-K5) associés aux points intermédiaires (31-35), un noeud de départ (S) associé au point de départ (SP), un noeud de destination (Z) associé au point de destination (ZP), et des bords (51-57) associés aux tronçons de route (A) correspondants et reliant le noeud de départ (S), le noeud de destination (Z) et les noeuds (K1-K5), dans lequel à chacun des bords (51-57) est associée une information respective sur le tracé d'une trajectoire partielle virtuelle (41-47) qui est associée au tronçon de route (A) correspondant,
- déterminer automatiquement un chemin (P1, P2) entre le nœud de départ (S) et le nœud de destination (Z) à l'intérieur du graphe (G), et
- assembler automatiquement des trajectoires partielles virtuelles (41-47) associées aux bords (51-57) du chemin (P1, P2) déterminé pour former la trajectoire virtuelle (B1, B2), la détermination du chemin (P1, P2) étant effectuée sur la base d'une information sur le comportement de conduite et/ou la capacité de conduite du véhicule de transport sans conducteur (1) et la détermination de la trajectoire virtuelle (B1, B2) étant effectuée sur la base d'au moins une condition marginale, dans lequel
- au nœud de départ (S), au nœud de destination (Z) et aux nœuds individuels (K1-K5) sont associées des transitions virtuelles possibles entre les parcours des trajectoires partielles virtuelles correspondantes (41-47), et un assemblage automatique des trajectoires partielles virtuelles (41-47), qui sont associées aux bords (51-57) du chemin déterminé (P1, P2) et des transitions virtuelles, qui sont associées aux noeuds (K1-K5) du chemin déterminé (P1, P 2), est effectué pour former la trajectoire virtuelle (B1, B2).

2. Procédé selon la revendication 1, dans lequel lors de la détermination automatique du chemin (P1, P2), on ne tient compte que des bords (51-57) le long des trajectoires partielles virtuelles (41-47) desquels le véhicule de transport sans conducteur (1) peut se déplacer automatiquement.

3. Procédé selon la revendication 1 ou 2, dans lequel il est associé à chacun des bords (51, 57) une information respective sur au moins une propriété du tronçon de route (A) qui leur est associée, et le chemin (P1, P 2) est déterminé en fonction des informations sur ladite au moins une propriété du tronçon de route (A) correspondant.

4. Procédé selon la revendication 3, dans lequel la propriété du tronçon de route (A) correspondant comprend sa longueur, sa largeur minimale, sa hauteur minimale, la masse totale maximale autorisée d'un véhicule circulant sur le tronçon de route (A) correspondant et/ou la vitesse maximale autorisée d'un véhicule circulant sur le tronçon de route (A) correspondant.

5. Véhicule de transport sans conducteur, comprenant un châssis de véhicule (2), une pluralité de roues (3) montées en rotation par rapport au châssis de véhicule (2) pour déplacer le véhicule de transport sans conducteur (1), au moins un entraînement (4) couplé à au moins une des roues (3) pour entraîner la roue correspondante (3) et un dispositif de commande (5) couplé audit moins un entraînement (4), dans lequel est stockée une carte virtuelle (60) d'un environnement (U), dans lequel le véhicule de transport sans conducteur (1), commandé par son dispositif de commande (5), doit se déplacer automatiquement depuis un point de départ (SP) le long d'une trajectoire virtuelle (B1, B2) jusqu'à un point de destination (ZP), le dispositif de commande (5) étant configuré pour déterminer la trajectoire virtuelle (B1, B2) en fonction du procédé selon l'une des revendications 1 à 4.

6. Système comprenant
- un véhicule de transport sans conducteur (1) qui comprend un châssis de véhicule (2), une pluralité de roues (3) montées en rotation par rapport au châssis de véhicule (2) pour déplacer le véhicule de transport sans conducteur (1), au moins un entraînement (4) couplé à au moins une des roues (3) pour entraîner la roue correspondante (3), et un dispositif de commande (5) couplé audit moins un entraînement (4), dans lequel est stockée une carte virtuelle (60) d'un environnement (U), dans lequel le véhicule de transport sans conducteur (1), commandé par son dispositif de commande (5), doit se déplacer automatiquement depuis un point de départ (SP) le long d'une trajectoire virtuelle (B1, B2) jusqu'à un point de destination (ZP), et
- un ordinateur (10) qui est configuré pour déterminer la trajectoire virtuelle (B1, B2) en fonction du procédé selon l'une des revendications 1 à 4 et pour transmettre une indication sur la trajectoire virtuelle déterminée (B1, B2), en particulier sans fil, au véhicule de transport sans conducteur (1).
